# EUROPÄISCHE PATENTSCHRIFT

(11) **EP 0 652 172 B1**
(45) Veröffentlichungstag und Bekanntmachung des Hinweises auf die Patenterteilung: **03.01.2001**
(21) Anmeldenummer: 94117559.8
(22) Anmeldetag: 08.11.1994
(51) Int. Cl.: B65G 65/42, B65G 23/42

(54) **Kastenbeschicker**
Feeder box
Caisson de chargement

(30) Priorität: 10.11.1993 DE 9317208 U
(43) Veröffentlichungstag der Anmeldung: 10.05.1995
(73) Patentinhaber: Hässler, Andreas, 89155 Erbach (DE)
(72) Erfinder: Hässler, Andreas, 89155 Erbach (DE)
(74) Vertreter: Patentanwälte Dipl.-Ing. Bodo Thielking Dipl.-Ing. Otto Elbertzhagen

(56) Entgegenhaltungen:
- DE-B- 1 213 345
- DE-C- 821 624
- DE-U- 8 300 674
- DE-U- 8 814 821

## Beschreibung

Die Erfindung betrifft einen Kastenbeschicker für die Beschickung mit und/oder die Lagerung von Ton, mit einem oben offenen Gehäuse, das zwei Längsseitenwände aufweist und eine rückseitige Stirnwand und im Frontbereich eine Austragsöffnung für das Schüttgut sowie einen längsbeweglich angetriebenen Boden aus quer sich bis unter die Längsseitenwände erstreckenden Lamellen, wobei die Lamellen als umlaufendes Trum angeordnet und unterhalb des den Boden bildenden Obertrums in Gegenrichtung über Umlenkorgane zurückgeführt sind.

Bei bekannten Kastenbeschickern dieser Art erfolgt der Antrieb der Lamellen über zwei zueinander parallele seitliche, umlaufende Ketten, zwischen denen sich die Lamellen erstrecken, die an beiden Ketten gehaltert sind. Der Antrieb der beiden Bodenketten erfolgt über eine vordere Antriebswelle mit einem Paar von vorderen Kettenantriebsrädern. Im rückwärtigen Umlenkbereich laufen die parallelen Ketten ebenfalls über Kettenräder, die auf einer nicht angetriebenen Umlenk- und Spannachse sitzen.

Die Größe einer derartigen bekannten Maschine ist begrenzt, da die Krafteinleitung in die Ketten ausschließlich über die beiden vorderen, auf der Antriebswelle angeordneten Kettenantriebsräder erfolgt. Die bei dieser Konstruktion auftretenden Zugkräfte in den Ketten erlauben im allgemeinen nur Achsabstände von ca. 10 bis 12 m bei nicht besonders hohen Schüttguthöhen. Das Drehmoment an der Antriebswelle ist vergleichsweise groß und erfordert einen hohen Getriebeaufwand.

Es ist auch bekannt, schwere Stückgüter mit einem Kettenförderer zu transportieren (DE-B-1 213 345), dessen Ketten über einen Antriebswagen über eine Hydraulik intermittierend angetrieben werden. Die bekannte Lösung ist nicht zum Transport von Schüttgütern geeignet.

Weiterhin ist eine Austragsvorrichtung, insbesondere für Getreidesilos bekannt (DE-C-821 624), bei der eine Antriebskette über einen Kurbelantrieb bewegt wird. Ein Kurbelantrieb ist für schwere Schüttgüter und große Fördervolumina nicht geeignet.

Schließlich ist auch noch ein Hubbalkenförderer bekannt (DE-U-88 14 821), der ebenfalls für nur vergleichsweise leichte Schüttgüter verwendbar ist. Ein solcher Hubbalkenförderer besteht aus intermittierend in Förderrichtung hin und her bewegbaren streifenförmigen Auflagen, die von einem endlosen Auflageband umschlungen werden. Die Auflagen werden jeweils gleichzeitig in Förderrichtung voranbewegt und einzeln in ihre Ausgangslage zurückgezogen. Auch diese bekannte Lösung ist nur für vergleichsweise leichte Fördergüter verwendbar.

Der Erfindung liegt die Aufgabe zugrunde, einen Kastenbeschicker der als bekannt vorausgesetzten Art so zu gestalten, daß er besonders geeignet ist für große Lagervolumina und große Füllhöhen. Derartige besonders große Kastenbeschicker sind erforderlich bei modernen, großen Ziegelwerken.

Die Lösung dieser Aufgabe erfolgt mit den Merkmalen des Kennzeichnungsteils von Anspruch 1. Bevorzugte Ausgestaltungen der Erfindung sind in den Unteransprüchen beschrieben.

Der erfindungsgemäße Kastenbeschicker hat den Vorteil, daß seine Größe nicht durch die Auslegung des Antriebs begrenzt wird. Durch das verwendete Antriebsprinzip werden die Antriebsteile nahezu ausschließlich auf Schub beansprucht. Mit dem verwendeten Antriebsprinzip lassen sich demzufolge bei wirtschaftlicher Auslegung der Antriebsglieder auch extrem große Antriebsleistungen aufbringen.

Nachstehend werden bevorzugte Ausführungsformen der Erfindung anhand der Zeichnung im einzelnen beschrieben. Es zeigen:

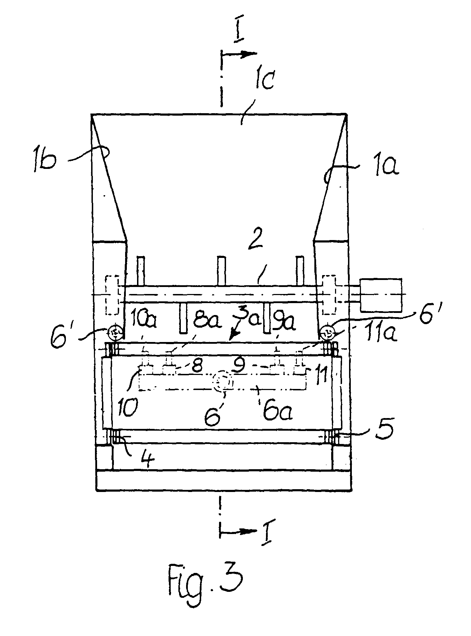

- Figur 1 -: einen schematischen vertikalen Längsschnitt durch den Kastenbeschicker entlang Ebene I-I in Figur 3,

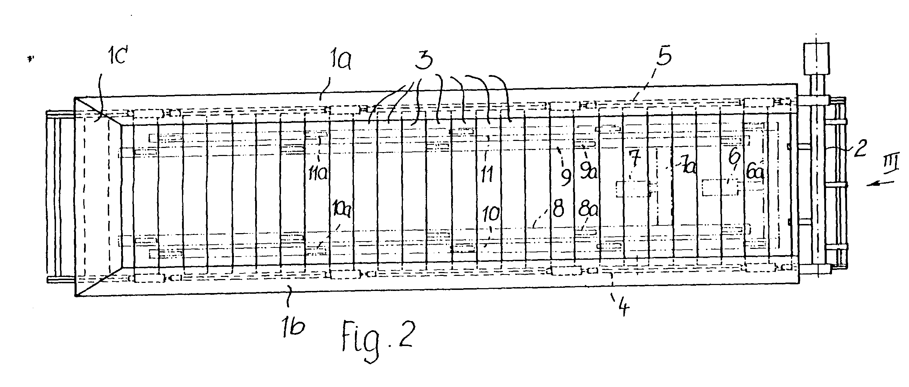

- Figur 2 -: eine Draufsicht auf den Kastenbeschicker in Richtung des Pfeils II gemäß Figur 1,
- Figur 3 -: eine Stirnansicht in Richtung der Pfeile III in Figuren 1 und 2.

Der Kastenbeschicker besitzt ein oben offenes Gehäuse 1 mit zwei Längsseitenwänden 1a und 1b, einer rückseitigen Stirnwand 1c und einem Boden, der aus dicht aneinander liegenden Lamellen 3 gebildet wird. An der der rückseitigen Stirnwand 1c gegenüberliegenden Frontseite ist eine Austragsöffnung 1d angeordnet, durch die das mit 12 bezeichnete Schüttgut unter Mitwirkung der Ausräumhaspel 2 ausgetragen werden kann. Der durch die Lamellen 3 gebildete Boden ist in Richtung des Pfeils 13 in Richtung auf die Austragsöffnung 1d taktweise beweglich. In der Zeichnung sind zwei unterschiedliche Arten der Antriebe für die Lamellen dargestellt, von denen jeweils nur eine Art verwendet wird. Die Zeichnungsfiguren enthalten also zwei alternative Antriebslösungen:

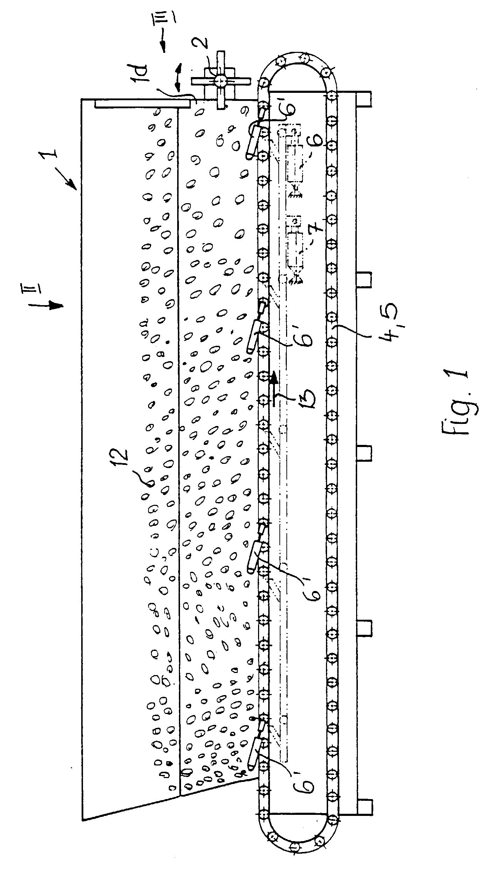

Bei einer ersten, nicht geschützten Lösung sind seitlich umlaufende Ketten 4 und 5, an denen die Lamellen befestigt sind, als Antriebsketten ausgebildet. Mehrere, hintereinander angeordnete Kolben-Zylinder-Einheiten 6' greifen taktweise in die seitlichen Antriebsketten 4 und 5 ein mit der Folge, daß diese taktweise um den Bewegungsbereich der Kolben-Zylinder-Einheiten 6' in Richtung des Pfeils 13 gemäß Figur 1 nach rechts bewegt werden.

Bei der zweiten, unter Schutz beanspruchten Ausführungsform erfolgt der Antrieb nicht über die seitlich umlaufenden Ketten 4 und 5, sondern direkt an den Lamellen 3.

Hierzu sind zwei Kolben-Zylinder-Einheiten 6 und 7 vorgesehen. Die Kolben-Zylinder-Einheiten 6 und 7 sind unterhalb des oberen Trums 3a des Lamellenstrangs angeordnet. Die Kolben-Zylinder-Einheit 6 ist über ein Querjoch 6a mit zwei seitlich angeordneten, zueinander parallelen Antriebsstangen 10 und 11 verbunden. Eine zweite Kolben-Zylinder-Einheit 7 ist über ein Querjoch 7a mit zwei ebenfalls zueinander und zu den erstgenannten parallel verlaufenden Antriebsstangen 8 und 9 verbunden. Die Bewegung der Kolben-Zylinder-Einheit bzw. von deren Kolbenstangen führt demzufolge einerseits zum Bewegen des Antriebsstangenpaares 8 und 9 und andererseits zum Antrieb des Antriebsstangenpaares 10 und 11.

Auf den Antriebsstangen 8 und 9 sind nach oben weisende Mitnehmer 8a und 9a vorgesehen. Entsprechend sind auf den Antriebsstangen 10 und 11 nach oben weisende Mitnehmer 10a und 11a vorgesehen. Diese Mitnehmer sind sämtlich so ausgestaltet und angeordnet, daß sie bei einer Vorwärtsbewegung des Antriebs in Richtung des Pfeils 13 kraftschlüssig mit den Lamellen 3 bzw. mit nicht dargestellten Lamellenträgern in Eingriff kommen, während sie bei einer Rückwärtsbewegung entgegen Pfeil 13 nach unten verschwenken.

Die Kolben-Zylinder-Einheiten 6 und 7 arbeiten gegenläufig. Während also die Kolben-Zylinder-Einheit 6 in Richtung des Pfeils 13 autreibt, zieht die Kolben-Zylinder-Einheit 7 die angekuppelten Antriebsstangen in Gegenrichtung zurück. Im nächsten Arbeitstakt treibt die Kolben-Zylinder-Einheit 7 in Pfeilrichtung 13 an und die Kolben-Zylinder-Einheit 6 in Gegenrichtung.

## Patentansprüche

1. Kastenbeschicker für die Beschickung mit und/oder die Lagerung von Ton, mit einem oben offenen Gehäuse (1), das zwei Längsseitenwände (1a und 1b) aufweist und eine rückseitige Stirnwand (1c) und im Frontbereich eine Austragsöffnung (1d) für das Schüttgut (12) sowie einen längsbeweglich angetriebenen Boden aus quer sich bis unter die Längsseitenwände erstreckenden Lamellen (3), wobei die Lamellen (3) als umlaufendes Trum angeordnet und unterhalb des den Boden bildenden Obertrums (3a) in Gegenrichtung über Umlenkorgane zurückgeführt sind,
dadurch gekennzeichnet,
daß der Antrieb durch mindestens eine am Obertrum (3a) angreifende, Schub erzeugende Antriebseinheit gebildet ist, und die Umlenkorgane nicht angetriebene Umlenkbereiche sind, wobei die Antriebseinheit eine taktweise arbeitende Kolben-Zylinder-Einheit (6; 7) aufweist, welche an Antriebsstangen (8; 9; 10; 11) angreift, welche Mitnehmer (8a, 9a; 10a, 11a) tragen, die im Vorwärtstakt formschlüssig mit den Lamellen (3) oder Lamellenhaltern in Eingriff und im Rückwärtstakt außer Eingriff gelangen, wobei die Antriebsstangen parallel zum Boden und unterhall desselben angeordnet sind.

2. Kastenbeschicker nach Anspruch 1,
dadurch gekennzeichnet,
daß mindestens zwei Kolben-Zylinder-Einheiten vorgesehen sind, die gegenläufig arbeiten.

3. Kastenbeschicker nach Anspruch 1 oder 2,
dadurch gekennzeichnet,
daß die Kolben-Zylinder-Einheiten (6; 7) hydraulische Kolben-Zylinder-Einheiten sind.

4. Kastenbeschicker nach einem der Ansprüche 1 bis 3,
dadurch gekennzeichnet,
daß die Umlenkbereiche ortsfest ausgebildet sind.

5. Kastenbeschicker nach Anspruch 4,
dadurch gekennzeichnet,
daß die Umlenkbereiche halbkreisförmige Umlenksegmente sind.

6. Kastenbeschicker nach einem der Ansprüche 1 bis 5,
dadurch gekennzeichnet,
daß eine Kolben-Zylinder-Einheit (6; 7) an einem Paar von zueinander parallelen Antriebsstangen (8, 9; 10, 11) angreift.

7. Kastenbeschicker nach Anspruch 6,
dadurch gekennzeichnet,
daß beiden gegenläufig arbeitenden Kolben-Zylinder-Einheiten (6; 7) jeweils ein Paar von Antriebsstangen (8, 9; 10, 11) zugeordnet ist, wobei alle Antriebsstangen zueinander parallel verlaufen.

8. Kastenbeschicker nach einem der Ansprüche 1 bis 7,
dadurch gekennzeichnet,
daß die Lamellen (3) sich an ihren Längsseiten schuppenartig überdecken.

9. Kastenbeschicker nach einem der Ansprüche 1 bis 8,
dadurch gekennzeichnet,
daß im Bereich der Austragsöffnung (ld) eine Ausräumhaspel (2) angeordnet ist.

## Claims

1. A box feeder for the loading with and/or the storing of clay, with a housing (1) open at the top, which has two longitudinal side walls (1a and 1b) and a rear end wall (1c) and in the front area a discharge opening (1d) for the bulk material (12) as well as a longitudinally moveable floor made from lamellae (3) extending crosswise to below the longitudinal side walls, whereby the lamellae (3) are positioned as a circulating strand and are passed back below the top run (3a) forming the floor in the opposite direction via deflecting instruments,
characterised in that
the drive is formed through at least one drive unit producing thrust and touching on the top run (3a), and the deflecting instruments are non-driven deflecting areas, whereby the drive unit has a piston-cylinder unit (6, 7) working in a stroke-wise way, which touches on drive rods (8, 9, 10, 11), which carry carriers (8a, 9a, 10a, 11a) which during the forward stroke engage in a shape-locking way with the lamellae (3) or lamellae holders, and during the backward stroke disengage, whereby the drive rods are positioned parallel to the floor and below the same.

2. A box feeder according to Claim 1
characterised in that
at least two piston-cylinder units are provided which work in a contra-rotating way.

3. A box feeder according to Claim 1 or 2
characterised in that
the piston-cylinder units (6, 7) are hydraulic piston-cylinder units.

4. A box feeder according to one of the Claims 1 to 3
characterised in that
the deflecting areas are formed in a stationary way.

5. A box feeder according to Claim 4
characterised in that
the deflecting areas are semi-circular deflecting segments.

6. A box feeder according to one of the Claims 1 to 5
characterised in that
a piston-cylinder unit (6, 7) touches on a pair of drive rods (8, 9, 10, 11) which are parallel to one another.

7. A box feeder according to Claim 6
characterised in that
a pair of drive rods (8, 9, 10, 11) is allocated to each of the contra-rotating piston-cylinder units (6, 7) respectively, whereby all drive rods run parallel to one another.

8. A box feeder according to one of the Claims 1 to 7
characterised in that
the lamellae (3) cover themselves in an imbricated way on their longitudinal sides.

9. A box feeder according to one of the Claims 1 to 8
characterised in that
in the area of the discharge opening (1d) there is a paddle wheel (2).

## Revendications

1. Caisson de chargement pour le remplissage et/ou le stockage d'argile, avec un bâti (1) ouvert, en haut, présentant deux parois latérales, longitudinales (1a et 1b), une paroi arrière (1c), la zone frontale, pourvue d'une ouverture de déchargement (1d) pour le déversement du produit en vrac (12) et un fond mobile, entraîné dans le sens longitudinal et composé de lamelles (3) qui s'étendent transversalement jusque sous les parois latérales, longitudinales et sont disposées pour former une pièce circulante qui est ramenée sous la pièce principale (3a), en marche inversée, par l'intermédiaire d'oganes de renvoi,
caractérisé en ce que
l'entraînement consiste, au moins, en une unité générant une poussée qui attaque la pièce principale (3a)
et que le organes de renvoi sont des zones de déviation non entraînées, le système d'entraînement présentant une unité piston-cylindre (6; 7) qui travaille rythmiquement et attaque les barres d'entraînement (8; 9; 10; 11) qui sont équipés de tocs (8a, 9a; 10a, 11a) entrant en prise avec les lamelles (3), en marche avant, tandis qu'ils sont hors de prise en marche rétrograde, et les barres d'entraînement étant disposés parallèlement par rapport au fond et sous ce dernier.

2. Caisson de chargement selon la revendication 1,
caractérisé en ce que
deux unités piston-cylindre, au moins, sont prévues, lesquelles travaillent inversement.

3. Caisson de chargemewnt selon la revendication 1 ou 2,
caractérisé en ce que
les unités piston-cylindre (6; 7) sont des dispositifs hydrauliques.

4. Caisson de chargement selon l'une des revendications 1 à 3,
caractérisé en ce que
les zones de renvoi sont stationnaires.

5. Caisson de chargement selon la revendication 4,
caractérisé en ce que
les zones de renvoi sont formées par des segments de déviation semi-circulaires.

6. Caisson de chargement selon l'une des revendications 1 à 5,
caractérisé en ce que
une unité piston-cylindre (6; 7) attaque un couple de barres d'entraînement parallèles l'une à l'autre (8, 9; 10, 11).

7. Caisson de chargement selon la revendication 6,
caractérisé en ce que
un couple de barres d'entraînement (8,9; 10; 11) est coordonné à chacune des deux unités antagonistes (6; 7), toutes les barres d'entraînement étant disposés parallèlement les uns aux autres.

8. Caisson de chargement selon l'une des revendications 1 à 7,
caractérisé en ce que
les lamelles (3) se chevauchent, en forme d'écailles, sur leurs côtés longitudinaux.

9. Caisson de chargement selon l'une des revendications 1 à 8,
caractérisé en ce que,
dans la zone de l'ouverture de déchargement (1d), un tourniquet de déversement (2) est installé.
